# EUROPEAN PATENT APPLICATION

(11) **EP 2 613 262 A2**
(43) Date of publication of application: **10.07.2013**
(21) Application number: 13150136.3
(22) Date of filing: 03.01.2013
(51) Int. Cl.: G06F 11/30, G06F 1/32, H04L 12/12

(54) **Cloud remote wakeup**

(30) Priority: 07.01.2012 US 201261584249 P; 20.12.2012 US 201213722605
(71) Applicant: Acer Cloud Technology Inc, Mountain View, CA 94041-2920 (US)
(72) Inventor: Berndt, Sandra, Cupertino, CA 95014 (US); Bertoni, Jonathan, Mountain View, CA 94040 (US); Lo, Raymond W., Mountain View, CA 94040 (US); Onorato, Steven Jason, Cupertino, CA 95014 (US); Princen, John, Cupertino, CA 95014 (US)
(74) Representative: Dendorfer, Claus

(57) **Abstract**

A technique for leveraging cloud resources includes maintaining a resource index for a user for resources that are available from a connected standby device. The resource index can store an identification of resources for an entity (e.g., a user or enterprise) that is stored on a connected standby device. The resource index can include resources of other devices, as well. A connected standby device will generally have at least three power states, online, offline, and connected standby. When a device is online, a processor of the device is powered up and capable of handling, e.g., remote requests for resources. When a device is offline, the device may or may not be off, but is in any case not responsive to remote access. When a device is on connected standby, a processor of the device is powered down, but the device is responsive to a wakeup packet, enabling the device to respond to a resource request, typically after a short delay while the processor powers up.

## Description

### CROSS-REFERENCE TO RELATED APPLICATIONS

The present application claims priority to U.S. Provisional Patent Application Ser. No. 61/584,249, filed Jan. 7, 2012 and entitled "Cloud Remote Wakeup," which is incorporated herein by reference.

### BACKGROUND

Users have access to a great many storage and computational resources today. For example, users can store huge amounts of content on many different devices that they own. It is not always easy for a user to figure out which device includes which content or resource. Moreover, devices are sometimes turned off, making access to the content or resource impossible in normal circumstances. Even devices that are on can be in a standby state that makes access to content or resources of the device more difficult.

A user may decide that some or all of their programs and/or content should remain on a physical machine of the user. The user may still wish to leverage the cloud or other third party resources to augment access. It is an ongoing area of research and development to determine how to leverage the cloud to match user preferences.

The foregoing examples of the related art and limitations related therewith are intended to be illustrative and not exclusive. Other limitations of the related art will become apparent upon a reading of the specification and a study of the drawings.

### SUMMARY

The following examples and aspects thereof are described and illustrated in conjunction with systems, tools, and methods that are meant to be exemplary and illustrative, not limiting in scope. In various examples, one or more of the above-described problems have been reduced or eliminated, while other examples are directed to other improvements.

A technique for leveraging cloud resources includes maintaining a resource index in the cloud for a user for a resource that is available on a connected standby device. The resource index can store an identification of a resource for use by an entity (e.g., a user or enterprise) that is available on a connected standby device. The resource index can include other resources on other devices, as well. A connected standby device will generally have at least three power states, online, offline, and connected standby. When a device is online, a processor of the device is powered up and capable of handling, e.g., remote requests for resources. When a device is offline, the device may or may not be off, but is in any case not responsive to remote access. When a device is on connected standby, a processor of the device is powered down, but the device is responsive to a wakeup packet, enabling the device to respond to a resource request, typically after a short delay while the processor powers up.

These and other advantages will become apparent to those skilled in the relevant art upon a reading of the following descriptions and a study of the several examples of the drawings.

### BRIEF DESCRIPTION OF THE DRAWINGS

The following figures are intended to illustrate by way of example some aspects of techniques described in this paper.
FIG. 1 depicts an example of an instant-on, always connected (IOAC) system.
FIG. 2 depicts an example of a sleep packet data structure.
FIG. 3 depicts an example of application-level data in a wakeup packet data structure.
FIG. 4 depicts a flowchart of an example of a method for IOAC-capable resource service.
FIG. 5 depicts a flowchart of an example of a method for a connected standby state content server cycle at a connected standby client.
FIG. 6 depicts a flowchart of an example of a method for a connected standby state resource server cycle at a notification server.
FIG. 7 depicts an example of a computer system.
FIG. 8 depicts an example of a system for indexing resources from multiple servers, including a connected standby resource server.

### DETAILED DESCRIPTION

In the following description, several specific details are presented to provide a thorough understanding. One skilled in the relevant art will recognize, however, that the concepts and techniques disclosed herein can be practiced without one or more of the specific details, or in combination with other components, etc. In other instances, well-known implementations or operations are not shown or described in detail to avoid obscuring aspects of various examples disclosed herein.

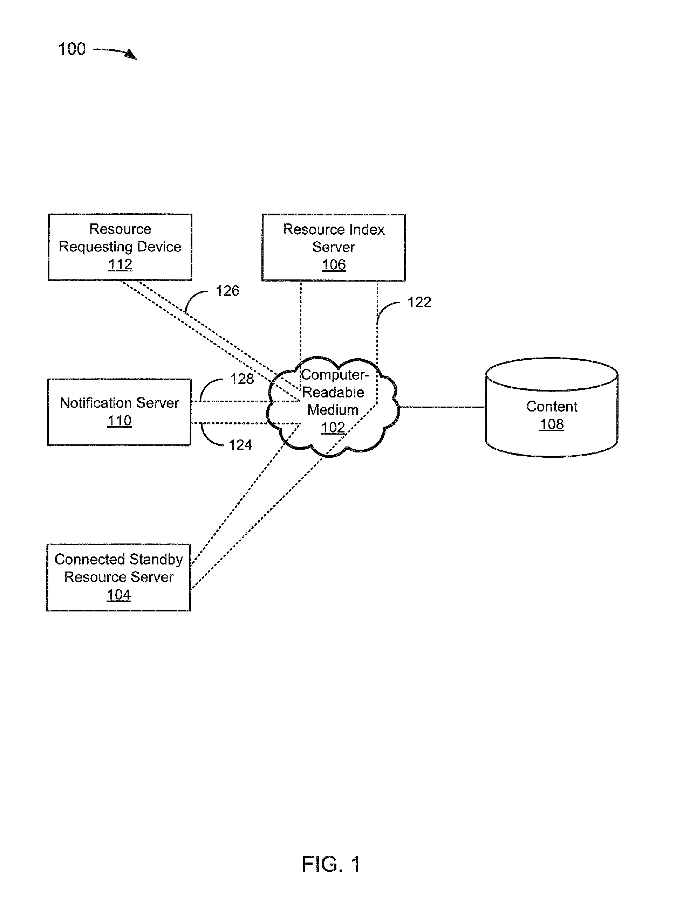

FIG. 1 depicts an example of an instant-on, always connected (IOAC) system 100. In the example of FIG. 1, the system 100 includes a computer-readable medium 102, a connected standby resource server 104, a resource index server 106, a content datastore 108, a notification server 110, and a resource requesting device 112.

In the example of FIG. 1, the computer-readable medium 102 can include communications hardware within a single computer, a device locally attached to a computer, or a networked system that includes several computer systems coupled together, such as a local area network (LAN), a cloud network, the Internet, a PSTN, or some other networked system. The term "Internet" as used in this paper refers to a network of networks that uses certain protocols, such as the TCP/IP protocol, and possibly other protocols such as the hypertext transfer protocol (HTTP) for hypertext markup language (HTML) documents that make up the World Wide Web (the web). Content is often provided by content servers, which are referred to as being "on" the Internet. A web server, which is one type of content server, is typically at least one computer system which operates as a server computer system and is configured to operate with the protocols of the World Wide Web and is coupled to the Internet. Applicable known or convenient physical connections of the Internet and the protocols and communication procedures of the Internet and the web are and/or can be used.

The computer-readable medium 102 can broadly include, as understood from relevant context, anything from a minimalist coupling of the components illustrated in the example of FIG. 1, to every component of the Internet and networks coupled to the Internet. However, components that are outside of the control of the system 100 can be considered sources of data received in an applicable known or convenient manner. The computer-readable medium 102 can include an enterprise private network and/or virtual private network (collectively, private networks). As the name suggests, private networks are under the control of an entity rather than being open to the public. Private networks include a head office and optional regional offices (collectively, offices). Many offices enable remote users to connect to the private network offices via some other network, such as the Internet.

A computer system will usually include a processor, memory, non-volatile storage, and an interface. Peripheral devices can also be considered part of the computer system. A typical computer system will include at least a processor, memory, and a device (e.g., a bus) coupling the memory to the processor. The processor can include, for example, a general-purpose central processing unit (CPU), such as a microprocessor, or a special-purpose processor, such as a microcontroller. The memory can include, by way of example but not limitation, random access memory (RAM), such as dynamic RAM (DRAM) and static RAM (SRAM). The memory can be local, remote, or distributed. The term "computer-readable storage medium" is intended to include physical media, such as memory.

The bus can couple the processor to non-volatile storage. The non-volatile storage is often a magnetic floppy or hard disk, a magnetic-optical disk, an optical disk, a read-only memory (ROM), such as a CD-ROM, EPROM, or EEPROM, a magnetic or optical card, or another form of storage for large amounts of data. Some of this data is often written, by a direct memory access process, into memory during execution of software on the computer system. The non-volatile storage can be local, remote, or distributed. The non-volatile storage is optional because systems can be created with all applicable data available in memory.

Software is typically stored in the non-volatile storage. Indeed, for large programs, it may not even be possible to store the entire program in memory. Nevertheless, it should be understood that for software to run, if necessary, it is moved to a computer-readable location appropriate for processing, and for illustrative purposes, that location is referred to as the memory in this paper. Even when software is moved to the memory for execution, the processor will typically make use of hardware registers to store values associated with the software, and local cache that, ideally, serves to speed up execution. As used herein, a software program is assumed to be stored at any known or convenient location (from non-volatile storage to hardware registers) when the software program is referred to as "implemented in a computer-readable storage medium." A processor is considered to be "configured to execute a program" when at least one value associated with the program is stored in a register readable by the processor.

The bus can also couple the processor to one or more interfaces. The interface can include one or more of a modem or network interface. It will be appreciated that a modem or network interface can be considered to be part of the computer system. The interface can include an analog modem, isdn modem, cable modem, token ring interface, satellite transmission interface (e.g. "direct PC"), or other interfaces for coupling a computer system to other computer systems. The interface can include one or more input and/or output (I/O) devices. The I/O devices can include, by way of example but not limitation, a keyboard, a mouse or other pointing device, disk drives, printers, a scanner, and other I/O devices, including a display device. The display device can include, by way of example but not limitation, a cathode ray tube (CRT), liquid crystal display (LCD), or some other applicable known or convenient display device.

In one example of operation, the computer system can be controlled by operating system software that includes a file management system, such as a disk operating system. One example of operating system software with associated file management system software is the family of operating systems known as Windows® from Microsoft Corporation of Redmond, Washington, and their associated file management systems. Another example of operating system software with its associated file management system software is the Linux operating system and its associated file management system. The file management system is typically stored in the non-volatile storage and causes the processor to execute the various acts required by the operating system to input and output data and to store data in the memory, including storing files on the non-volatile storage.

Some portions of the detailed description may be presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The algorithms and displays presented herein are not inherently related to any particular computer or other apparatus. Various general purpose systems may be used with programs to configure the general purpose systems in a specific manner in accordance with the teachings herein as specifically purposed computer systems, or it may prove convenient to construct specialized apparatus to perform the methods of some embodiments. The required structure for a variety of these systems will appear from the description below. In addition, the techniques are not described with reference to any particular programming language, and various embodiments may thus be implemented using a variety of programming languages.

Referring once again to FIG. 1, the connected standby resource server 104 is coupled to the computer-readable medium 102. The connected standby resource server 104 has at least three power states: online, offline, and connected standby. When "online," the connected standby resource server 104 has a powered up processor, which, for example, enables the device to respond to resource requests; the connection can be referred to as "active." When "offline," the connected standby resource server 104 may or may not be off (with a powered-down processor), but for the purposes of this paper, it is sufficient that the device is unreachable by a notification server (described later). When on "connected standby," the connected standby resource server 104 has a powered-down processor, but is capable of being awakened remotely. The "online" and "connected standby" states can be referred to as "powered-on" states even though connected standby generally denotes a power-saving state because at least one component of the connected standby device (e.g., a network interface) will have power.

In a specific implementation, the connected standby resource server 104 can be characterized as including the content datastore 108 and a content serving engine for responding to datastore access requests. As used in this paper, an engine includes a dedicated or shared processor and, typically, firmware or software modules that are executed by the processor. Depending upon implementation-specific or other considerations, an engine can be centralized or its functionality distributed. An engine can include special purpose hardware, firmware, or software embodied in a computer-readable medium for execution by the processor. As used in this paper, a computer-readable medium is intended to include all mediums that are statutory (e.g., in the United States, under 35 U.S.C. 101), and to specifically exclude all mediums that are non-statutory in nature to the extent that the exclusion is necessary for a claim that includes the computer-readable medium to be valid. Known statutory computer-readable mediums include hardware (e.g., registers, random access memory (RAM), non-volatile (NV) storage, to name a few), but may or may not be limited to hardware.

A datastore can be implemented, for example, as software embodied in a physical computer-readable medium on a general- or specific-purpose machine, in firmware, in hardware, in a combination thereof, or in an applicable known or convenient device or system. Datastores in this paper are intended to include any organization of data, including tables, comma-separated values (CSV) files, traditional databases (e.g., SQL), or other applicable known or convenient organizational formats. Datastore-associated components, such as database interfaces, can be considered "part of" a datastore, part of some other system component, or a combination thereof, though the physical location and other characteristics of datastore-associated components is not critical for an understanding of the techniques described in this paper.

Datastores can include data structures. As used in this paper, a data structure is associated with a particular way of storing and organizing data in a computer so that it can be used efficiently within a given context. Data structures are generally based on the ability of a computer to fetch and store data at any place in its memory, specified by an address, a bit string that can be itself stored in memory and manipulated by the program. Thus some data structures are based on computing the addresses of data items with arithmetic operations; while other data structures are based on storing addresses of data items within the structure itself. Many data structures use both principles, sometimes combined in non-trivial ways. The implementation of a data structure usually entails writing a set of procedures that create and manipulate instances of that structure.

In the example of FIG. 1, the resource index server 106 is coupled to the computer-readable medium 102. The resource index server 106 indexes resources available from the connected standby resource server, which can include such resources as a camera, storage, a speaker, a microphone, a radio, computing resources, an application or function of an application, content stored in the content datastore 108, or some other resource. The manner through which the resource index server 106 obtains information about the resources can vary by implementation and/or configuration. For example, an entity controlling the connected standby resource server 104 can identify particular files (e.g., music files, pictures, documents, executables, etc.) by name, by directory, by permission, by type, by some other categorization, or a combination thereof. In a specific implementation, the resource index server 106 includes entries associated with each file or group of files. A resource indexing engine at the resource index server 106 can index resources of the connected standby resource server 104 and/or the content datastore 108. The resource indexing engine can store the index in a resource index datastore accessible to the resource index server 106. In a specific implementation, the resource index is stored at least in part on the resource requesting device 112.

In a specific implementation, the resource is intended to be consumed by the same entity that controls the connected standby resource server 104. For example, a user may own an Acer cloud personal computer (one example of a device that can be implemented as a connected standby resource server) and wish to access resources on the Acer cloud personal computer through a smart phone or other devices that the user controls. The user can indicate to the resource index server 106 the resource to which the smart phone and/or other devices have access. In an alternative, resources of the connected standby resource server 104 can be made available to any device the user controls.

In an alternative implementation in which the entity includes more than one user, it may or may not be desirable to include additional controls over which user has access to which resource. Enterprises often make use of usernames and passwords to ensure the proper access is granted to particular users. A particular user can have at least partial control over the connected standby server 104 in this alternative (e.g., the connected standby resource server 104 could be on the personal computer of the particular user). The connected standby resource server 104 can be made available in addition to an always-on enterprise resource server. An enterprise may or may not ask permission or rely upon the user to identify resources to the resource index server 106; the enterprise may or may not consider all resources to be indexable regardless of user permissions.

In a specific implementation, the resource index server 106 does not allow unauthorized access to the indexed resource, or based upon user credentials allows access to a subset of the index. When access is restricted, indexed resources may or may not be visible to the user attempting access. For example, the user may be able to see only the resource for which access will be granted or may be able to see a list of resources that includes resources to which access will not be granted. In an alternative, authorization can be handled in whole or in part at the notification server 110.

In the example of FIG. 1, the content datastore 108 is coupled to the computer-readable medium 102. The content datastore 108 is optional because the connected standby resource server 104 can be configured to provide access to non-content resources (e.g., engines). The content datastore 108 may or may not be on the connected standby resource server. For example, the content datastore 108 can be on a connected standby content server, distributed across multiple connected standby resource servers, coupled to an always-on resource server, stored in the cloud, stored in some other location, or a combination of these. The number of places in which the content can be stored may or may not have an impact on how resources are indexed at the resource index server 106.

A data structure of the resource index datastore will include data sufficient to identify resources. A location of a resource is an example of such data. It is reasonably likely that it will be considered desirable to include a name of a resource, as well, which can be the file name of a resource item. Where the location includes more than one resource item, it may become desirable as a practical matter to include names for resource items at the resource index datastore, but where the location includes a file name, this may or may not be necessary in practice. The resource index datastore can also include a server state for each resource data structure. The server state can be maintained at a notification server (described later) or in the same physical (centralized or distributed) location as the resource index datastore; in the latter case, the resource index server 106 must receive state information from the connected standby resource server 104 (e.g., through the notification server). Alternatively, a query regarding state of a resource can be directed to a resource state server (not shown), which provides a current state of a resource to the querying device or some other device in response to the query.

In the example of FIG. 1, the notification server 110 is coupled to the computer-readable medium 102. In a specific implementation, in operation, a secure channel is formed between the notification server 110 and the connected standby resource server 104. For example, the connected standby resource server 104 can make a transmission control protocol (TCP) connection to the notification server 110. It may be noted that relative to the notification server, the connected standby resource server 104 is actually a client of the notification server 110. The connected standby resource server 104 is a ***resource server*** of a client device that consumes a resource, which is described later. The secure channel is formed when the connected standby resource server 104 comes online, or after the connected standby resource server 104 is woken up, as described later. When forming a new connection when the connected standby resource server 104 is woken up, new keys can be generated. The connection between the connected standby resource server 104 and the notification server 110 is kept alive while the connected standby resource server 104 is in connected standby. For example, the connected standby resource server 104 can communicate a powered-on state by sending keep-alive packets on the secure channel while in a powered-on state. The TCP keep-alive option can be used to detect connection failures efficiently.

In a specific implementation, the connected standby resource server 104 and the notification server 110 establish a shared session key and the connected standby resource server 104 sends its MAC address and an IOAC hardware type specifier to the notification server 110 encrypted with the session key. The IOAC hardware type specifier informs the notification server 110 that the connected standby resource server 104 is capable of entering a connected standby state. It is axiomatic that only a connected standby resource server 104 (or other connected standby-capable device or agent thereof) could properly send an IOAC hardware type specifier. In this manner, the system 100 is capable of providing an IOAC resource server with a machine that is capable of entering a power-saving state, such as a PC.

The notification server 110 includes a state tracking engine and a state datastore. The state tracking engine keeps track of state of the connected standby resource server 104. After the notification server 110 is aware that the connected standby resource server 104 is IOAC-capable, the notification server 110 can use an unshared key to generate a sleep packet payload and a secret wakeup key for each connection. The sleep packet payload can include, for example, a version number, a device ID, a random 64-bit value, a creation time (milliseconds since the epoch), an identifier indicating the model ID of the IOAC hardware, the encrypted shared session key, the encrypted MAC address, and the signature of the previous fields using the unshared server key. In a specific implementation, the notification server 110 sends the sleep packet payload and the secret wakeup key to the connected standby resource server 104, encrypted with the same session key.

The connected standby resource server 104 can use the data from the notification server 110 to program IOAC-capable hardware with the secret wakeup key, the sleep packet payload, the destination IP address and UDP port of a server that will receive the sleep packets, the shared session key (optional security enhancement), and a configurable transmission interval (e.g., 20 seconds). When the connected standby resource server 104 enters a connected standby state, the IOAC hardware sends a sleep packet at the specified transmission interval. In a specific implementation, the IOAC hardware augments each sleep packet with a sequence number and a signature using the session key. The sleep packets, although not the same as conventional keep-alive signals, function as keep-alive signals to the notification server 110.

In a specific implementation, the sleep packet is encapsulated in a UDP/IP packet, which is transmitted in Ethernet or WiFi format. When making reference to WiFi, it is not unusual to refer to various wireless devices as stations. A station, as used in this paper, may be referred to as a device with a media access control (MAC) address and a PHY interface to a wireless medium that complies with the Institute of Electrical and Electronics Engineers (IEEE) 802.11 standards, which would include WiFi-compliant devices because WiFi is generally considered a superset of the 802.11 standards. In alternative embodiments, a station may comply with a different standard than IEEE 802.11, or no standard at all, may be referred to as something other than a "station," and may have different interfaces to a wireless or other medium. IEEE 802.11a-1999, IEEE 802.11b-1999, IEEE 802.11g-2003, IEEE 802.11-2007, and IEEE 802.11n TGn Draft 8.0 (2009) are incorporated by reference. As used in this paper, a system that is 802.11 standards-compatible or 802.11 standards-compliant complies with at least some of one or more of the incorporated documents' requirements and/or recommendations, or requirements and/or recommendations from earlier drafts of the documents.

The term "layer" is used in this paper in accordance with standard industry use. The Open Systems Interconnection (OSI) model is a way of sub-dividing a communications system into smaller parts called layers. A layer is a collection of conceptually similar functions that provide services to the layer above it and receives services from the layer below it. On each layer, an instance provides services to the instances at the layer above and requests service from the layer below. Although other models (e.g., TCP/IP model) define different layers, it is not difficult for those with skill in computer science to compare other models with the OSI model.

Layer One of the OSI Model, the Physical Layer, defines the electrical and physical specifications for devices. In particular, it defines the relationship between a device and a transmission medium, such as a copper or optical cable. This includes the layout of pins, voltages, cable specifications, hubs, repeaters, network adapters, host bus adapters (HBA) used in storage area networks, and more. Various Physical Layer Ethernet standards are in the Physical Layer; Ethernet incorporates both this layer and the DLL. The same applies to other local-area networks, such as token ring, FDDI, ITU-T G.hn, and IEEE 802.11, as well as personal area networks such as Bluetooth and IEEE 802.15.4. It is not uncommon to refer to the Physical Layer as PHY, particularly in the context of 802.11a/b/g/n PHY or ITU-T G.hn PHY. However, in this paper "PHY" is intended to include any applicable Physical Layer (including proprietary or ad hoc) or applicable portion thereof, and the term PHY is used henceforth.

The major functions and services performed by the PHY are: Establishment and termination of a connection to a communications medium; participation in the process whereby the communication resources are effectively shared among multiple users; modulation, or conversion between the representation of digital data in user equipment and the corresponding signals transmitted over a communications channel (these are signals operating over the physical cabling or over a radio link).

Layer Two of the OSI model, the DLL, provides the functional and procedural means to transfer data between network entities and to detect and possibly correct errors that may occur in the PHY; the DLL manages the interaction of devices with a shared medium. (The DLL is part of or corresponds to the Link Layer of the TCP/IP reference model.) Both WAN and LAN services arrange bits from the PHY into logical sequences called frames. Not all PHY bits necessarily go into frames, as some of these bits are purely intended for PHY functions.

IEEE 802.3 (Ethernet) is the dominant wired LAN protocol and IEEE 802.11 the dominant wireless LAN protocol. The IEEE 802.11 protocol defines MAC and Logical Link Control (LLC) sublayers of the DLL. The MAC sublayer detects but does not correct errors. Above the MAC sublayer is the media-independent IEEE 802.2 LLC sublayer, which deals with addressing and multiplexing on multiaccess media.

Layer Eight of the OSI model, the application layer (Layer Five of the TCP/IP model), provides process-to-process communications. The application layer uses underlying protocols to establish host-to-host connections. The application layer in the OSI model is narrower in scope than that of the TCP/IP model, but for the purposes of this paper the TCP/IP application layer (or the combination of Layers Six, Seven, and Eight of the OSI model) is a bit more representative of the described embodiments. Specifically, the TCP/IP application layer includes protocols that enable process-to-process communication across an IP network.

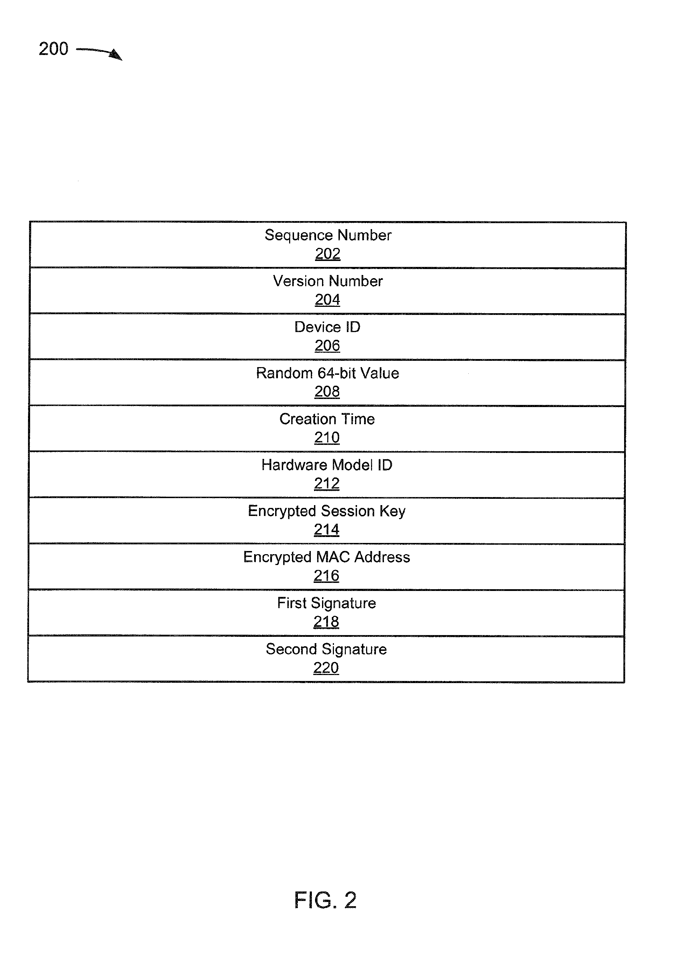

FIG. 2 depicts an example of application-level data in a sleep packet data structure 200. Obviously, the order of the fields in the sleep packet might be different for different implementations, and the contents can be adjusted in a manner that should be understandable to one who implements the techniques described in this paper. In the example of FIG. 2, the sleep packet data structure 200 includes a sequence number field 202, a version number field 204, a device ID field 206, a random 64-bit value field 208, a creation time field 210, a hardware model ID field 212, an encrypted session key field 214, an encrypted MAC address field 216, a first signature field 218 of fields 204-216 using the unshared server key, and a second signature field 220 of fields 202-218 using the shared session key. The second signature can optionally be added to provide stronger protection against replay attacks.

Referring once again to the example of FIG. 1, the notification server 110 can maintain the state of the connected standby resource server 104. The state can include online when there is an active connection between client and server; connected standby when there is no active connection between client and server, and the server is receiving sleep packets (connected standby can be further subdivided into standby-idle and standby-waking); and unknown when there is no active connection and the server is not receiving sleep packets. When the connected standby resource server 104 is in connected standby state, the notification server 110 can send wakeup requests to the connected standby resource server 104 to compel the connected standby resource server 104 to change to an online state. During the transition from connected standby (idle) to online, the connected standby resource server 104 can be referred to as in a connected standby (waking) state.

In the example of FIG. 1, the resource requesting device 112 is coupled to the computer-readable medium 102. In a specific implementation, the resource requesting device 112 can check the resource index server 106 to identify a resource. In another specific implementation, the resource requesting device 112 includes the resource index server 106, or a portion thereof (e.g., a datastore including a resource index and/or resource server state). For illustrative purposes, it is assumed that the resource is located on the connected standby resource server 104. The resource index server 106 may or may not know the status (e.g., connected standby) of the connected standby resource server 104, depending upon the implementation and/or configuration of the system 100. However, the notification server 110 knows.

The resource requesting device 112 can send a wakeup request to the notification server 110. If the resource requesting device 112 is not aware of the status of the connected standby resource server 104 (and therefore does not know whether a wakeup is necessary), the resource requesting device 112 can send a request for a resource that acts as a wakeup request. Accordingly, it can properly be stated that the resource requesting device 112 sends a wakeup request to the notification server 110.

Upon receipt of the wakeup request, the notification server 110 retrieves the most valid sleep packet, if there is one. For example, the notification server 110 can save the packet with the highest sequence number, which is particularly useful if an optional signature is used. As another example, the notification server 110 can save the most recent packet.

Upon receipt of the wakeup request, the notification server 110 computes a wakeup key and generates a wakeup packet using a server-only unshared encryption key. The wakeup key can be computed using the device ID, random number in the sleep packet, and the server-only unshared encryption key. The packet format can be deduced from the IOAC hardware model ID. The notification server 110 can sign the wakeup packet using the retrieved session key, decrypt the 6-byte MAC address of the connected standby resource server 104 from the packet, and locate the source IP address from the sleep packet (the source IP address received may be the IP address of the firewall/router, and can be different from the IP address of the connected standby resource server 104). The notification server 110 puts the connected standby resource server 104 in standby-waking state.

The notification server 110 receives a sleep packet from the connected standby resource server 104 when the connected standby resource server 104 is in standby-waking state. The notification server 110 repeats the procedure that follows receipt of a wakeup request, for the sleep packet (assuming the sleep packet is determined or assumed to be valid).

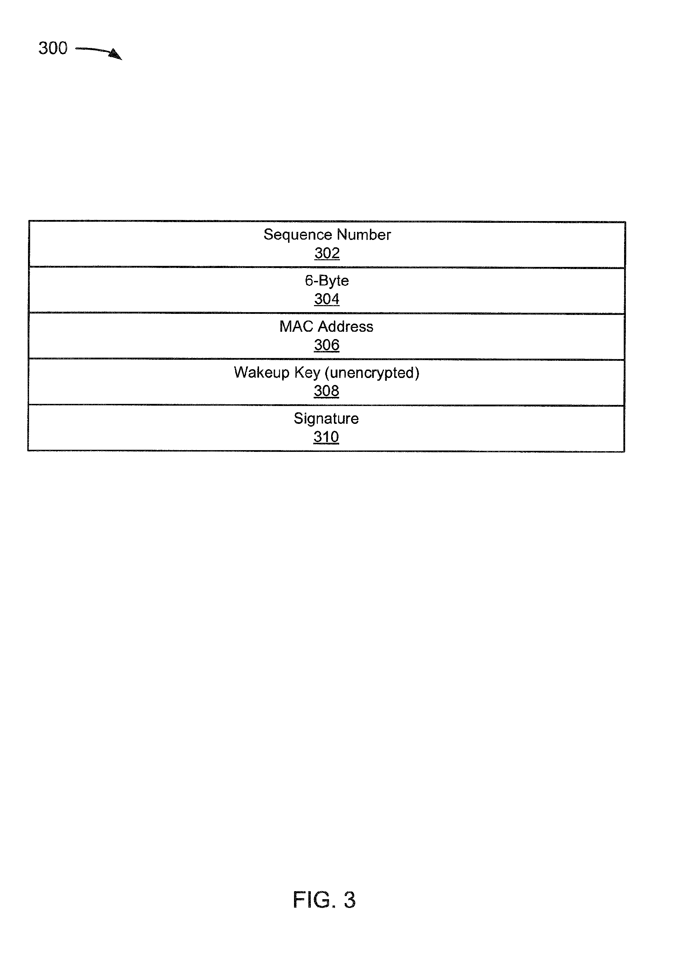

FIG. 3 depicts an example of application-level data in a wakeup packet data structure 300. Obviously, the order of the fields in the wakeup packet might be different for different implementations, and the contents can be adjusted in a manner that should be understandable to one who implements the techniques described in this paper. In the example of FIG. 3, the wakeup packet data structure 300 includes a sequence number field 302, a 6-byte field 304 (e.g., each byte containing 0xff), a MAC address field 306 (e.g., 16 repetitions of the target computer's MAC address), a wakeup key 308 (6-byte, unencrypted), and a signature field 310 of fields 302-308 using the shared session key. The sequence number can match one of the recent sleep packet sequence numbers, with a small programmable window.

The reason for including the various fields as described above is to protect against certain types of attacks. Variations can be made where the risk of attack is ameliorated for some other reason (or perhaps not seen as a serious concern) or where alternative variations work as well or better. The design is believed to be secure against unauthorized wakeup of a connected standby resource server 104. Wakeup requires the secret wakeup key and the session key.

The design is believed to be secure against replaying a wakeup packet. The wakeup secret is used once. After the connected standby resource server 104 is awake, a new secret is established.

The design is believed to be secure against injecting sleep packets to falsify state of the connected standby resource server 104. Sleep packets are validated using the unshared server key.

The design is believed to be secure against using a replay attack to falsify state of the connected standby resource server 104. Sequence numbers make replay attacks difficult. The protection is imperfect, though, because the notification server 110 can be stateless; so a packet could conceivably be replayed. For further protection, a datastore in memory could be maintained.

The design is believed to be secure against injecting packets to falsify the IP address of the connected standby resource server 104. As long as a sleep packet originating from the connected standby resource server 104 arrives at the notification server 110, the device state can be updated and a wakeup packet can be sent back.

Advantageously, the design is functional even when the connected standby resource server 104 is behind a firewall, with not need to reconfigure the firewall. The notification server 110 can reach the connected standby resource server 104 behind a firewall that provides a UDP tunnel. In order to reach the connected standby resource server 104 when in an online state can entail the connected standby resource server 104 initiating a TCP connection that is allowed by the firewall and using a TCP keep-alive option to keep the connection active (maintaining firewall state). In order to reach the connected standby resource server 104 when in connected standby mode can entail the connected standby resource server 104 periodically transmitting sleep packets over UDP to the notification server 110. The UDP packet causes the firewall to open a return patch from the notification server 110 to the connected standby resource server 104. The return path is used to deliver wakeup requests. To handle firewalls with short UDP timeouts, the notification server 110 retransmits wakeup packets whenever a sleep packet is received.

Advantageously, the design works with unreliable networks. When the connected standby resource server 104 is powered-on, the TCP protocol handles packet loss. When the connected resource server 104 is in connected standby, sleep packets are transmitted periodically. Wakeup requests are retransmitted upon receiving a sleep packet. Eventually, a wakeup request will reach the connected standby resource server 104.

Advantageously, the design supports roaming. The connected standby resource server 104 can use different access points when it is in connected standby. IOAC-capable WiFi hardware will handle WiFi association and also get a client IP address via DHCP. A new external IP address is automatically recognized by the notification server 110.

Advantageously, the design supports load-balancing and adding and removing notification servers. The wakeup information is kept in the sleep packet. Any notification server (have the unshared key) can derive the wakeup key and decrypt necessary information from the sleep packet.

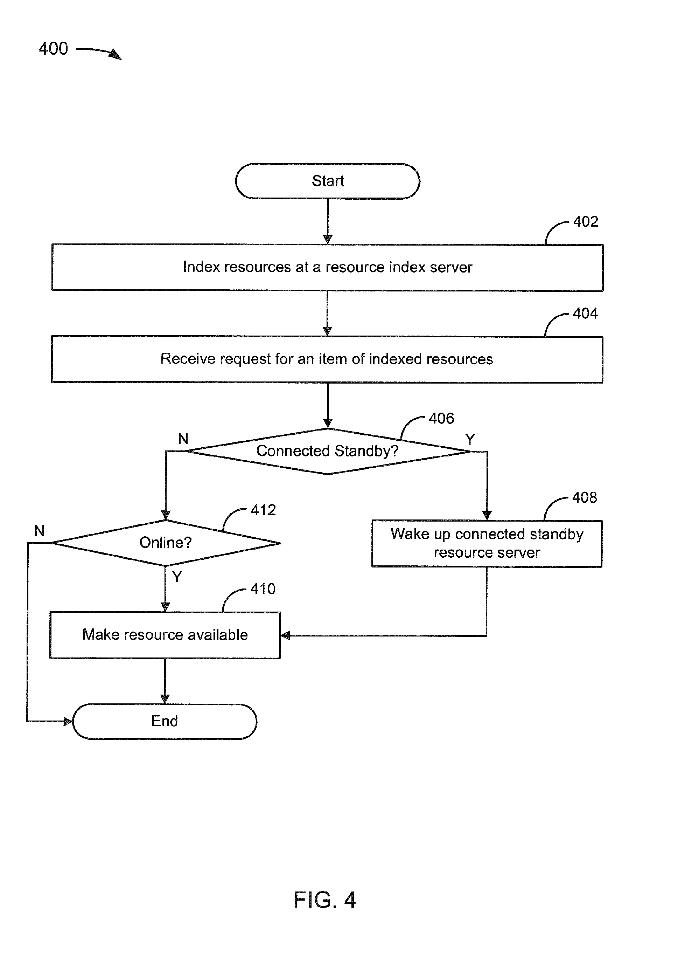

FIG. 4 depicts a flowchart 400 of an example of a method for IOAC-capable resource service. The flowchart 400 is organized as a sequence of modules. However, it should be understood that these, and modules associated with other methods described herein, may be reordered into different sequences of modules or for parallel execution.

In the example of FIG. 4, the flowchart 400 starts at module 402 with indexing resources at a resource index server. In a specific implementation, the resource includes one or both of an engine function or datastore content. The resource index server is preferably an always-on server that is available to online devices. The resource index server can include a directory of all of a user's resources. For example, the resource index server could include a file directory from a personal computer (perhaps including an icon). Depending upon the implementation, the resource index server can include a thumbnail of photos that are available on the, e.g., personal computer.

In the example of FIG. 4, the flowchart 400 continues to module 404 with receiving a request for an item of indexed resources. The request can be initiated by a user clicking on an icon or thumbnail associated with a desired resource item. A notification server can receive the request and respond to the request according to the state of a resource server that includes the desired resource.

In the example of FIG. 4, the flowchart 400 continues to decision point 406 where it is determined whether the state of the resource server is connected standby. If it is determined that the state of the resource server is connected standby (406-Y), then the flowchart 400 continues to module 408 with waking up the connected standby resource server. When the connected standby resource server has been awakened, the flowchart 400 ends at module 410 with making the resource available.

Returning once again to decision point 406, if it is determined that the state of the resource server is not connected standby (406-N), then the flowchart 400 continues to decision point 412 where it is determined whether the resource server is online. If it is determined that the resource server is online (412-Y), then the flowchart 400 ends at module 410 with making the resource available. If, on the other hand, it is determined that the resource server is not online (412-N), then the flowchart 400 ends without making the resource available. When the flowchart 400 ends without making the resource available, the process may or may not be retried (or an alternative process may or may not be conducted).

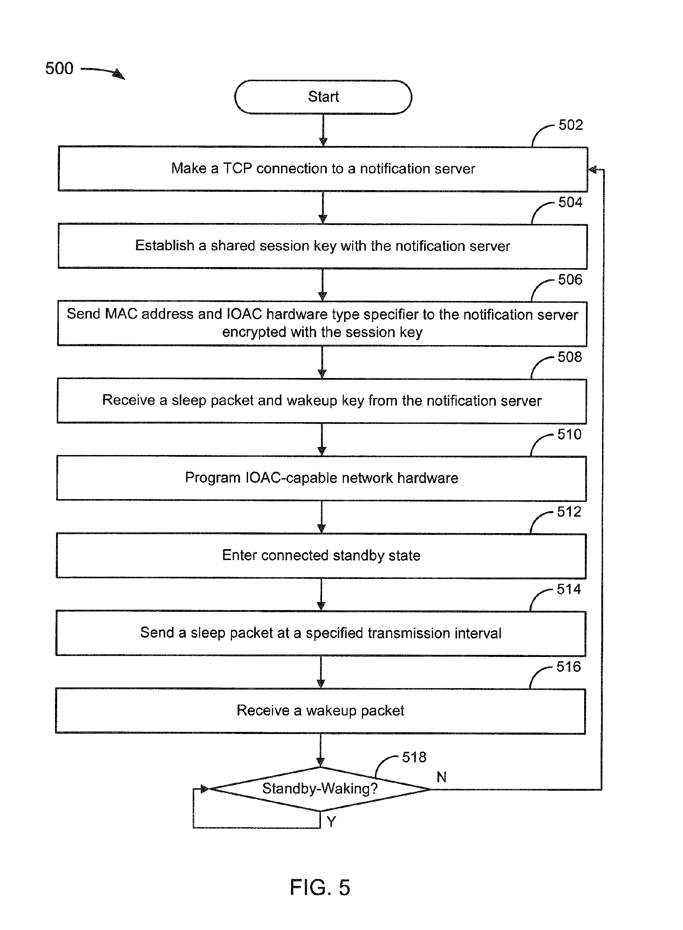

FIG. 5 depicts a flowchart 500 of an example of a method for a connected standby state resource server cycle at a connected standby client. In the example of FIG. 5, the flowchart 500 starts at module 502 with making a TCP connection to a notification server. The connection is kept alive while the client (e.g., connected standby resource server) is in a power-on state and has network access. In alternative embodiments, the connection can be by some other protocol (or no protocol at all).

In the example of FIG. 5, the flowchart 500 continues to module 504 with establishing a shared session key with the notification server. Establishing a shared session key can be associated with establishing a secure connection.

In the example of FIG. 5, the flowchart 500 continues to module 506 with sending a MAC address and IOAC hardware type specifier to the notification server encrypted with the session key. The IOAC hardware type specifier is necessary to establish that the client (e.g., connected standby resource server) is capable of connected standby.

In the example of FIG. 5, the flowchart 500 continues to module 508 with receiving a sleep packet and wakeup key from the notification server. The sleep packet payload can contain, for example, a version number, the device id, a random 64-bit value, a creation time (milliseconds since the epoch), an identifier indicating the model id of the IOAC hardware, the encrypted shared session key, the encrypted MAC address, the signature of the previous fields using the unshared server key.

In the example of FIG. 5, the flowchart 500 continues to module 510 with programming IOAC-capable network hardware. The client (e.g., connected standby resource server) includes IOAC-capable network hardware, which is a prerequisite for entering a connected standby state. In a specific implementation, the IOAC-capable network hardware is programmed using the wakeup key, sleep packet payload, destination IP address and UDP port of a server that will receive sleep packets, the shared session key (optional security enhancement) and a configurable transmission interval. When properly programmed, the IOAC-capable network hardware will enable to client (e.g., connected standby resource server) to enter a connected standby state, to be awakened at a later time by the notification server.

In the example of FIG. 5, the flowchart 500 continues to module 512 with entering a connected standby state.

In the example of FIG. 5, the flowchart 500 continues to module 514 with sending a sleep packet at a specified transmission interval. The specified transmission interval is, as was previously mentioned, configurable. It is expected that in some cases, it may be desirable to adjust the transmission interval to ensure proper, better, or optimal functionality for a given network and/or network environment conditions.

In the example of FIG. 5, the flowchart 500 continues to module 516 with receiving a wakeup packet.

In the example of FIG. 5, the flowchart 500 continues to decision point 518 with determining whether the client (e.g., connected standby resource server) is in a standby-waking state. If it is determined that the client is in a standby-waking state (518-Y), then the flowchart 500 loops until the client is no longer in a standby-waking state. If, on the other hand, it is determined that the client is no longer in a standby-waking state (518-N), then the flowchart 500 returns to module 502 and continues as described previously. It may be noted that the client can send a sleep packet while in the standby-waking state, which can indicate to the notification server that the client is waking up.

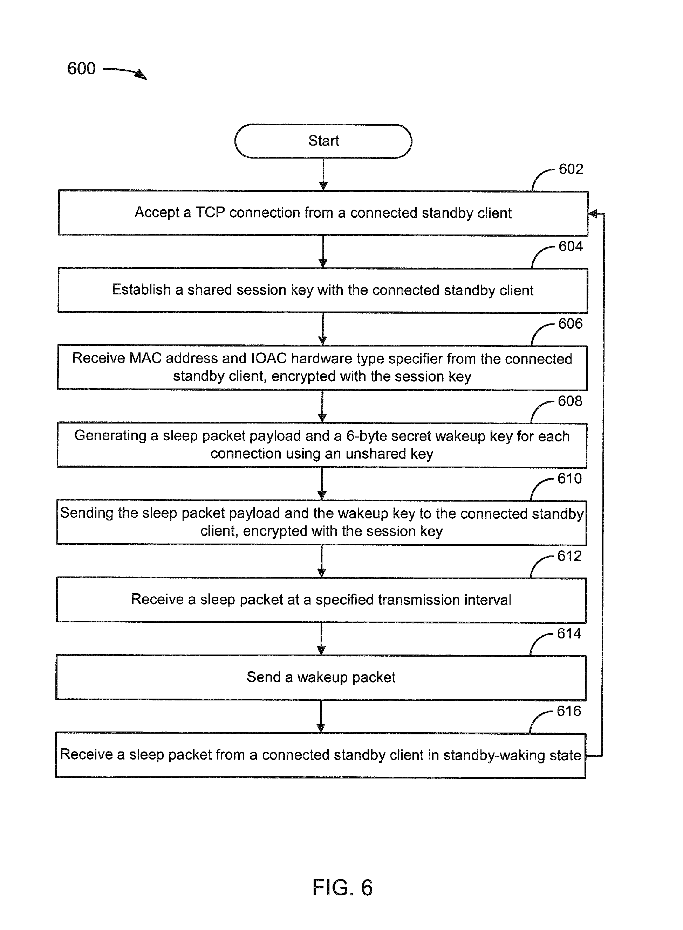

FIG. 6 depicts a flowchart 600 of an example of a method for a connected standby state resource server cycle at a notification server. In the example of FIG. 6, the flowchart 600 starts at module 602 with accepting a TCP connection from a connected standby client.

In the example of FIG. 6, the flowchart 600 continues to module 504 with establishing a shared session key with the connected standby client. Establishing a shared session key can be associated with establishing a secure connection.

In the example of FIG. 6, the flowchart 600 continues to module 606 with receiving a MAC address and IOAC hardware type specifier from the connected standby client encrypted with the session key. The IOAC hardware type specifier is necessary to establish that the client (e.g., connected standby resource server) is capable of connected standby.

In the example of FIG. 6, the flowchart 600 continues to module 608 with generating a sleep packet payload and an, e.g., 6-byte secret wakeup key for each connection using an unshared key. The sleep packet payload can contain, for example, a version number, the device id, a random 64-bit value, a creation time (milliseconds since the epoch), an identifier indicating the model id of the IOAC hardware, the encrypted shared session key, the encrypted MAC address, the signature of the previous fields using the unshared server key.

In the example of FIG. 6, the flowchart 600 continues to module 610 with sending the sleep packet payload and the wakeup key to the connected standby client, encrypted with the session key.

In the example of FIG. 6, the flowchart 600 continues to module 612 with receiving a sleep packet at a specified transmission interval. The specified transmission interval is, as was previously mentioned, configurable. It is expected that in some cases, it may be desirable to adjust the transmission interval to ensure proper, better, or optimal functionality for a given network and/or network environment conditions.

In the example of FIG. 6, the flowchart 600 continues to module 614 with sending a wakeup packet.

In the example of FIG. 6, the flowchart 600 continues to module 616 with receiving a sleep packet from a connected standby client in standby-waking state. Upon receipt of a valid sleep packet from a client that is in standby-waking state, the notification server can repeat the process just described to deliver a wakeup packet.

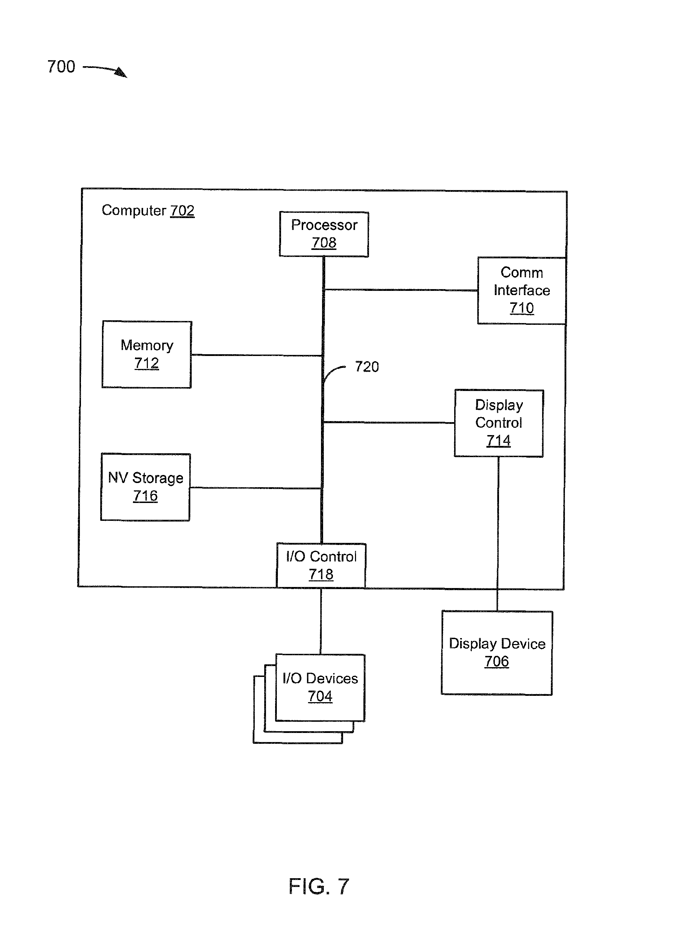

FIG. 7 depicts an example of a computer system 700. The system 700 may be a conventional computer system that can be used as a client computer system, such as a wireless client or a workstation, or a server computer system. The system 700 includes a device 702, I/O devices 704, and a display device 706. The device 702 includes a processor 708, a communications interface 710, memory 712, display controller 714, non-volatile storage 716, I/O controller 718, clock 722, and radio 724. The device 702 may be coupled to or include the I/O devices 704 and the display device 706.

The device 702 interfaces to external systems through the communications interface 710, which may include a modem or network interface. It will be appreciated that the communications interface 710 can be considered to be part of the system 700 or a part of the device 702. The communications interface 710 can be an analog modem, ISDN modem or terminal adapter, cable modem, token ring IEEE 802.5 interface, Ethernet / IEEE 802.3 interface, wireless 802.11 interface, satellite transmission interface (e.g. "direct PC"), WiMAX / IEEE 802.16 interface, Bluetooth interface, cellular/mobile phone interface, third generation (3G) mobile phone interface, code division multiple access (CDMA) interface, Evolution-Data Optimized (EVDO) interface, general packet radio service (GPRS) interface, Enhanced GPRS (EDGE / EGPRS), High-Speed Downlink Packet Access (HSPDA) interface, or other interfaces for coupling a computer system to other computer systems.

The processor 708 may be, for example, a conventional microprocessor such as an Intel Pentium microprocessor or Motorola power PC microprocessor. The memory 712 is coupled to the processor 708 by a bus 720. The memory 712 can be Dynamic Random Access Memory (DRAM) and can also include Static RAM (SRAM). The bus 720 couples the processor 708 to the memory 712, also to the non-volatile storage 716, to the display controller 714, and to the I/O controller 718.

The I/O devices 704 can include a keyboard, disk drives, printers, a scanner, and other input and output devices, including a mouse or other pointing device. The display controller 714 may control in the conventional manner a display on the display device 706, which can be, for example, a cathode ray tube (CRT) or liquid crystal display (LCD). The display controller 714 and the I/O controller 718 can be implemented with conventional well known technology.

The non-volatile storage 716 is often a magnetic hard disk, flash memory, an optical disk, or another form of storage for large amounts of data. Some of this data is often written, by a direct memory access process, into memory 712 during execution of software in the device 702. One of skill in the art will immediately recognize that the terms "machine-readable medium" or "computer-readable medium" includes any type of storage device that is accessible by the processor 708.

Clock 722 can be any kind of oscillating circuit creating an electrical signal with a precise frequency. In a non-limiting example, clock 722 could be a crystal oscillator using the mechanical resonance of vibrating crystal to generate the electrical signal.

The radio 724 can include any combination of electronic components, for example, transistors, resistors and capacitors. The radio is operable to transmit and/or receive signals.

The system 700 is one example of many possible computer systems which have different architectures. For example, personal computers based on an Intel microprocessor often have multiple buses, one of which can be an I/O bus for the peripherals and one that directly connects the processor 708 and the memory 712 (often referred to as a memory bus). The buses are connected together through bridge components that perform any necessary translation due to differing bus protocols.

Network computers are another type of computer system that can be used in conjunction with the teachings provided herein. Network computers do not usually include a hard disk or other mass storage, and the executable programs are loaded from a network connection into the memory 712 for execution by the processor 708. A Web TV system, which is known in the art, is also considered to be a computer system, but it may lack some of the features shown in FIG. 7, such as certain input or output devices. A typical computer system will usually include at least a processor, memory, and a bus coupling the memory to the processor.

In addition, the system 700 is controlled by operating system software which includes a file management system, such as a disk operating system, which is part of the operating system software. One example of operating system software with its associated file management system software is the family of operating systems known as Windows® from Microsoft Corporation of Redmond, Washington, and their associated file management systems. Another example of operating system software with its associated file management system software is the Linux operating system and its associated file management system. The file management system is typically stored in the non-volatile storage 716 and causes the processor 708 to execute the various acts required by the operating system to input and output data and to store data in memory, including storing files on the non-volatile storage 716.

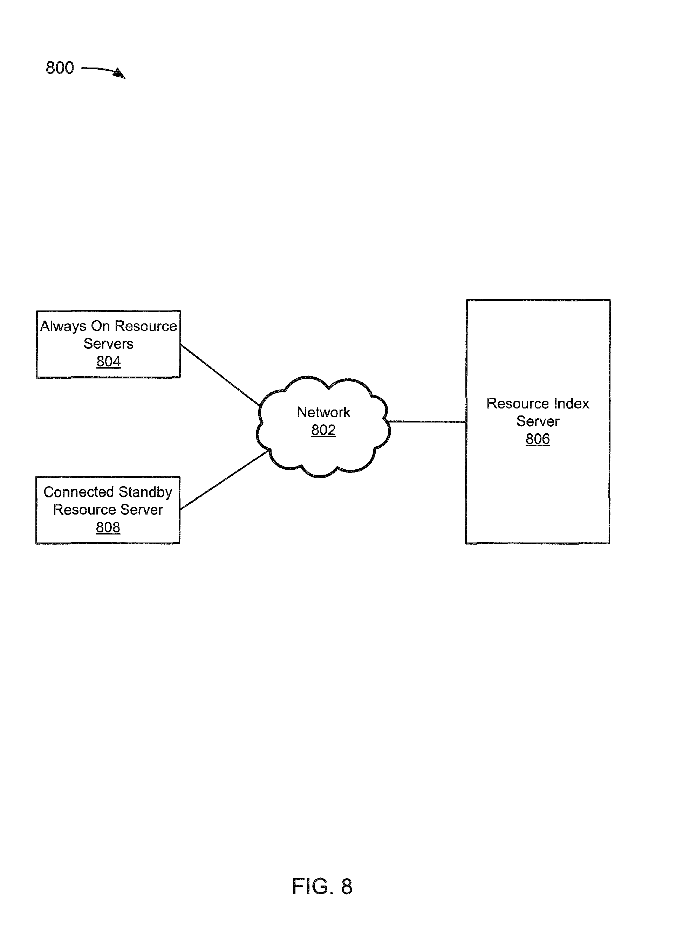

FIG. 8 depicts an example of a system 800 for indexing resources from multiple servers, including a connected standby resource server. The system 800 includes a network 802, always on resource servers 804, a resource index server 806, and connected standby resource server 808.

In the example of FIG. 8, the network 802 can include any applicable network, such as a LAN, WLAN, the Internet, etc. In an embodiment, the network 802 includes a cloud. In a specific implementation, zero or more of the always on resource servers 804 are in the cloud. In another specific implementation, the resource index server 806 is in the cloud. The connected standby resource server 808, on the other hand, is under the control of the entity that owns the resource of the connected standby resource server 808.

In the example of FIG. 8, the always on resource servers 804 include engines and/or datastores of content that are made available to clients of the always on resource servers 804. The resources of the always on resource servers 804 are indexed in the resource index server 806.

In the example of FIG. 8, the connected standby resource server 808 includes and engine or datastore of content that is made available to clients of the connected standby resource server 808. The resource of the connected standby resource server 808 is indexed in the resource index server 806. This enables a user to access aggregated resources that are stored in multiple distinct locations on or off the cloud.

It may be noted that the connected standby resource server 808 is capable of online or connected standby state. Therefore, at times, it may be the case that the system 800 operates as if all relevant resource servers (804, 808) are online. However, advantageously, the connected standby resource server 808 can switch to a connected standby state at a future time to, for example, conserve power or to increase security while the computer is not in use. For example, where the connected standby resource server 808 is a personal computer, a user may prefer that the computer "hibernate" after some interval of non-use. In lieu of hibernation, the computer can enter a connected standby state that saves a great deal of power, without taking resources of the computer completely offline. The same user may prefer that the computer be unreachable by any device that does not know how to wake it (such as an appropriately configured notification server).

Advantageously, a user who has control over multiple engines and/or datastores of content can index the resources in a single location, e.g., in the cloud. When a machine associated with one of the datastores is in connected standby, a notification engine can wake the machine to bring the datastore online. In this way, all of a user's resources are available at any given time (assuming the machine is not offline), and indexed at a central, always-available location. In a single-user resource control implementation, other users may not be authorized to view indexed resources, or in the alternative, some indexed resources could be made publicly (or selectively) available to others.

Advantageously, a parent can index resources from multiple family members. For example, a parent could index resources from the parent's desktop computer, the parent's cell phone, child's cell phone, spouse's laptop, etc. The parent can then make the resources available to any of the other members of the parent's family, perhaps limited to those who are authorized. For example, children may not have access to the parent's work files. The parent may or may not also wish to make the resource or a subset thereof publicly available (e.g., in a family web page) or selectively available (e.g., to those who are invited to browse a photo album of the family).

Advantageously, a systems administrator of an enterprise can index resources from members (e.g., employees) of the enterprise. For example, the sys admin could compile a resource index across workstations of employees without the need to redundantly store the same resource (or even store the resource in a central location). In a specific implementation, the computers with resources that can be shared are part of a private network controlled by the enterprise. The network can include computers (or portions thereof) that login to the network remotely. In a specific implementation, an enterprise datastore (which can be centralized or distributed) can use the resource index to store redundant copies of content in backup storage. This redundancy can enable access to content even if an employee computer goes offline, or if the data is lost (e.g., accidentally deleted, lost in a hardware failure, etc.). Authorization for different employees in the enterprise can vary within the enterprise hierarchy, within a matter hierarchy, or in accordance with other authorization rules/policies. Employees may or may not be able to prevent indexing certain resources, such as content that is stored in a personal folder on a work machine.

Depending upon the implementation, some indexed resources can be made available from a third party or stored in a datastore that is not controlled by a user or enterprise (e.g., in a third party datastore). The advantages of such an implementation are that a wide variety of resources can be made available. The disadvantages of such an implementation are that resources can be changed or removed potentially without notice. Therefore, such an implementation may or may not entail additional oversight to ensure that indexed resource is up-to-date. It should be noted that even in an implementation that includes third party datastores, the connected standby resource server 808 will be configured to work with an authorized notification server (see, e.g., FIG. 1). For this reason, the resource index server 806 and the connected standby resource server 808 are likely to be controlled by the same entity.

Some aspects of embodiments of the invention are defined in the following enumerated example embodiments (EEEs):
EEE 1: A method comprising:
   indexing resources available from one or more resource servers, wherein a resource server of the one or more resource servers has at least two power states: online and connected standby;
   storing a resource index including resource items associated with the available resources, wherein a resource item of the resource items includes a resource server identifier of the resource server;
   receiving a request for a resource of the resource server;
   determining whether the resource server is in the connected standby power state;
   when the resource server is determined to be in the connected standby power state, providing a wakeup stimulus sufficient to cause the resource server to enter the online power state;
   providing access to the requested resource from the resource server.
EEE 2: The method of EEE 1, further comprising:
   storing the resource index on a device;
   receiving the request for the resource from an application on the device.
EEE 3: The method of EEE 1, further comprising: determining a power state of the resource server by communicating with a state server, wherein the state server includes a datastore in which the power state of the resource server is stored.
EEE 4: The method of EEE 1, further comprising: triggering the wakeup stimulus by communicating with a notification server, wherein the wakeup stimulus is provided by the notification server.
EEE 5: The method of EEE 1, further comprising:
   sending a sleep packet to the resource server when the resource server transitions from the connected standby power state to the online power state;
   receiving the sleep packet from the resource server when the resource server transitions from the online power state to the connected standby power state.
EEE 6: The method of EEE 1, further comprising:
   sending a sleep packet to the resource server each time the resource server enters the online power state;
   receiving the sleep packet from the resource server when the resource server transitions from the online power state to the connected standby power state.
EEE 7: The method of EEE 1, further comprising: sending a wakeup key to the resource server from a notification server, wherein the resource server transitions from the connected standby power state to the online power state when the resource server receives the wakeup key.
EEE 8: The method of EEE 1, further comprising: sending a wakeup key to the resource server from a notification server each time the resource server enters the online power state; wherein the resource server transitions from the connected standby power state to the online power state when the resource server receives the wakeup key.
EEE 9: The method of EEE 1, further comprising:
   sending a sleep packet from a state server to the resource server when the resource server enters the online power state;
   receiving the sleep packet from the resource server when the resource server transitions from the online power state to the connected standby power state;
   deriving a wakeup key from the sleep packet;
   sending the wakeup key to the resource server, wherein the resource server transitions from the connected standby state to the online power state when the resource server receives the wakeup key.
EEE 10: The method of EEE 1, wherein the resource server identifier is a first resource server identifier of a first resource server, and wherein the resource item includes a second resource server identifier of a second resource server.
EEE 11: The method of EEE 1, further comprising generating new keys when the resource server is awakened with the wakeup stimulus.
EEE 12: The method of EEE 1, further comprising:
   forming a secure channel between a notification server and the resource server;
   maintaining a connection between the notification server and the resource server when the resource server is in the connected standby power state.
EEE 13: The method of EEE 1, further comprising receiving keep-alive packets from the resource server while the resource server is in an online or connected standby power state. EEE 14: The method of EEE 1, further comprising using a TCP keep-alive option to detect connection failures.
EEE 15: The method of EEE 1, further comprising:
   establishing a shared session key between the resource server and the notification server;
   sending an instant-on, always connected (IOAC) hardware type specifier and a MAC address of the resource server from the resource server to the notification server encrypted with the shared session key, wherein the IOAC hardware type specifier informs the notification server that the resource server is capable of entering a connected standby state.
EEE 16: The method of EEE 1, further comprising: tracking state of the resource server.
EEE 17: The method of EEE 1, further comprising:
   using an unshared key to generate a sleep packet payload and a wakeup key;
   sending the sleep packet payload and the wakeup key to the resource server, encrypted with a shared session key.
EEE 18: The method of EEE 17, further comprising: programming instant-on, always connected (IOAC) hardware with the wakeup key, the sleep packet payload, a destination IP address and UDP port of a server that will receive sleep packets, the shared session key, and a configurable transmission interval.
EEE 19: The method of EEE 1, further comprising: sending from instant-on, always connected (IOAC) hardware a sleep packet at a specified transmission interval, wherein the sleep packet acts as a keep-alive signal to the notification server.
EEE 20: The method of EEE 19, further comprising: augmenting the sleep packet with a sequence number and a signature using a shared session key.
EEE 21: A method comprising:
   (a) making a TCP connection to a notification server;
   (b) establishing a shared session key with the notification server;
   (c) sending a MAC address and instant-on, always connected (IOAC) hardware type specifier to the notification server encrypted with the session key;
   (d) receiving a sleep packet and wakeup key from the notification server;
   (e) programming IOAC-capable network hardware;
   (f) entering connected standby state;
   (g) sending a sleep packet at a specified transmission interval;
   (h) receiving a wakeup packet.
EEE 22: The method of EEE 21, further comprising: programming the IOAC-capable network hardware using the wakeup key, payload of the sleep packet, a destination IP address and UDP port of a server that will receive sleep packets, the shared session key, and the specified transmission interval.
EEE 23: The method of EEE 21, further comprising: enabling a resource server to enter a connected standby state, to be awakened at a later time by the notification server.
EEE 24: The method of EEE 21, wherein the specified transmission interval is configurable, further comprising: adjusting the transmission interval.
EEE 25: The method of EEE 21, further comprising:
   determining whether a resource server is in a standby-waking state;
   when the resource server is in the standby-waking state, waiting until the resource server exits the standby-waking state;
   repeating (a) through (h).
EEE 26: A method comprising:
   accepting a TCP connection from a connected standby client;
   establishing a shared session key with the connected standby client;
   receiving a MAC address and an instant-on, always connected (IOAC) hardware type specifier from the connected standby client;
   generating a sleep packet payload and a secret wakeup key for a connection using an unshared key;
   sending the sleep packet payload and the wakeup key to the connected standby client;
   receiving a sleep packet at a specified transmission interval;
   sending a wakeup packet;
   receiving a sleep packet from a connected standby client in standby-waking state.
EEE 27: The method of EEE 26, further comprising: encrypting the MAC address and IOAC hardware type specifier with the shared session key.
EEE 28: The method of EEE 26, wherein the secret wakeup key is a 6-byte key for each connection, including the connection.
EEE 29: The method of EEE 26, further comprising: encrypting the sleep packet payload and the wakeup key with the shared session key.

## Claims

1. A method comprising:
indexing resources available from one or more resource servers, wherein a resource server of the one or more resource servers has at least two power states: online and connected standby;
storing a resource index including resource items associated with the available resources, wherein a resource item of the resource items includes a resource server identifier of the resource server;
receiving a request for a resource of the resource server;
determining whether the resource server is in the connected standby power state;
when the resource server is determined to be in the connected standby power state, providing a wakeup stimulus sufficient to cause the resource server to enter the online power state;
providing access to the requested resource from the resource server.

2. The method of claim 1, further comprising:
storing the resource index on a device;
receiving the request for the resource from an application on the device.

3. The method of claim 1 or claim 2, further comprising:
determining a power state of the resource server by communicating with a state server, wherein the state server includes a datastore in which the power state of the resource server is stored; and/or
triggering the wakeup stimulus by communicating with a notification server, wherein the wakeup stimulus is provided by the notification server.

4. The method of any of claims 1-3,
further comprising:
sending a sleep packet to the resource server when the resource server transitions from the connected standby power state to the online power state;
receiving the sleep packet from the resource server when the resource server transitions from the online power state to the connected standby power state;
and/or
further comprising:
sending a sleep packet to the resource server each time the resource server enters the online power state;
receiving the sleep packet from the resource server when the resource server transitions from the online power state to the connected standby power state.

5. The method of any of claims 1-4, further comprising:
sending a wakeup key to the resource server from a notification server, wherein the resource server transitions from the connected standby power state to the online power state when the resource server receives the wakeup key; and/or
sending a wakeup key to the resource server from a notification server each time the resource server enters the online power state; wherein the resource server transitions from the connected standby power state to the online power state when the resource server receives the wakeup key.

6. The method of any of claims 1-5, further comprising:
sending a sleep packet from a state server to the resource server when the resource server enters the online power state;
receiving the sleep packet from the resource server when the resource server transitions from the online power state to the connected standby power state;
deriving a wakeup key from the sleep packet;
sending the wakeup key to the resource server, wherein the resource server transitions from the connected standby state to the online power state when the resource server receives the wakeup key.

7. The method of any of claims 1-6,
wherein the resource server identifier is a first resource server identifier of a first resource server, and wherein the resource item includes a second resource server identifier of a second resource server; and/or
further comprising generating new keys when the resource server is awakened with the wakeup stimulus.

8. The method of any of claims 1-7,
further comprising:
forming a secure channel between a notification server and the resource server;
maintaining a connection between the notification server and the resource server when the resource server is in the connected standby power state;
and/or
further comprising:
receiving keep-alive packets from the resource server while the resource server is in an online or connected standby power state.

9. The method of any of claims 1-8,
further comprising:
using a TCP keep-alive option to detect connection failures;
and/or
further comprising:
establishing a shared session key between the resource server and the notification server;
sending an instant-on, always connected (IOAC) hardware type specifier and a MAC address of the resource server from the resource server to the notification server encrypted with the shared session key, wherein the IOAC hardware type specifier informs the notification server that the resource server is capable of entering a connected standby state;
and/or
further comprising: tracking state of the resource server.

10. The method of any of claims 1-9, further comprising:
using an unshared key to generate a sleep packet payload and a wakeup key;
sending the sleep packet payload and the wakeup key to the resource server, encrypted with a shared session key; and
in some embodiments further comprising: programming instant-on, always connected (IOAC) hardware with the wakeup key, the sleep packet payload, a destination IP address and UDP port of a server that will receive sleep packets, the shared session key, and a configurable transmission interval.

11. The method of any of claims 1-10, further comprising:
sending from instant-on, always connected (IOAC) hardware a sleep packet at a specified transmission interval, wherein the sleep packet acts as a keep-alive signal to the notification server; and
in some embodiments further comprising: augmenting the sleep packet with a sequence number and a signature using a shared session key.

12. A use of one or more computing devices, the use comprising:
(a) making a TCP connection to a notification server;
(b) establishing a shared session key with the notification server;
(c) sending a MAC address and instant-on, always connected (IOAC) hardware type specifier to the notification server encrypted with the session key;
(d) receiving a sleep packet and wakeup key from the notification server;
(e) programming IOAC-capable network hardware;
(f) entering connected standby state;
(g) sending a sleep packet at a specified transmission interval;
(h) receiving a wakeup packet.

13. The use of claim 12, further comprising:
programming the IOAC-capable network hardware using the wakeup key, payload of the sleep packet, a destination IP address and UDP port of a server that will receive sleep packets, the shared session key, and the specified transmission interval; and/or
enabling a resource server to enter a connected standby state, to be awakened at a later time by the notification server; and/or
adjusting the transmission interval, wherein the specified transmission interval is configurable; and/or
further comprising:
determining whether a resource server is in a standby-waking state;
when the resource server is in the standby-waking state, waiting until the resource server exits the standby-waking state;
repeating (a) through (h).

14. A use of one or more computing devices, the use comprising:
accepting a TCP connection from a connected standby client;
establishing a shared session key with the connected standby client;
receiving a MAC address and an instant-on, always connected (IOAC) hardware type specifier from the connected standby client;
generating a sleep packet payload and a secret wakeup key for a connection using an unshared key;
sending the sleep packet payload and the wakeup key to the connected standby client;
receiving a sleep packet at a specified transmission interval;
sending a wakeup packet;
receiving a sleep packet from a connected standby client in standby-waking state.

15. The use of claim 14,
further comprising: encrypting the MAC address and IOAC hardware type specifier with the shared session key; and/or
wherein the secret wakeup key is a 6-byte key for each connection, including the connection; and/or
further comprising: encrypting the sleep packet payload and the wakeup key with the shared session key.
